(19)

Europäisches
Patentamt
European
Patent Office
Office européen
des brevets

(11) **EP 3 995 222 A1**

(12) **EUROPEAN PATENT APPLICATION**

(43) Date of publication:
 **11.05.2022 Bulletin 2022/19**

(21) Application number: **21201537.4**

(22) Date of filing: **07.10.2021**

(51) International Patent Classification (IPC):
 ***B21B 38/02*** *(2006.01)*

(52) Cooperative Patent Classification (CPC):
 **B21C 51/00; G06T 7/00;** B21B 38/00; B21B 41/10

(84) Designated Contracting States:
 **AL AT BE BG CH CY CZ DE DK EE ES FI FR GB
 GR HR HU IE IS IT LI LT LU LV MC MK MT NL NO
 PL PT RO RS SE SI SK SM TR**
 Designated Extension States:
 **BA ME**
 Designated Validation States:
 **KH MA MD TN**

(30) Priority: **05.11.2020 JP 2020185266**

(71) Applicant: **Primetals Technologies Japan, Ltd.
 Hiroshima-shi, Hiroshima 733-8553 (JP)**

(72) Inventors:
 • **MOCHIZUKI, Chitoshi
  Hiroshima, 733-8553 (JP)**
 • **OMURA, Akihiro
  Hiroshima, 733-8553 (JP)**
 • **KANEMORI, Shinya
  Tokyo, 100-8332 (JP)**
 • **YAMADA, Masahiro
  Tokyo, 100-8332 (JP)**

(74) Representative: **Strehl Schübel-Hopf & Partner
 Maximilianstrasse 54
 80538 München (DE)**

(54) **INAPPROPRIATE QUALITY JUDGMENT APPARATUS AND INAPPROPRIATE QUALITY
 JUDGMENT METHOD**

(57)    The present invention provides an inappropriate quality judgment apparatus and an inappropriate quality judgment method capable of easily judging an inappropriate quality of the strip surface shape of a metal strip without using a special light source such as a rod-like light source.
    An inappropriate quality judgment apparatus includes: a roll whose rotary shaft is extended and installed in the width direction of a rolled steel strip and that lifts the rolled steel strip upward; cameras that captures images including a lifted area of the rolled steel strip lifted upward by the roll; and a controller that judges an inappropriate quality of the strip shape of the rolled steel strip on the basis of the images captured by the cameras.

Fig 1

EP 3 995 222 A1

**Description**

BACKGROUND OF THE INVENTION

1. Field of the Invention

The present invention relates to an inappropriate quality judgment apparatus and an inappropriate quality judgment method for detecting inappropriate quality of strip shape of a rolled metal strip.

2. Description of the Related Art

As an example of a shape measuring apparatus that can measure the shape of a strip material with high accuracy and is easy to maintain, JP-2002-221410-A states that a rod-like light source for illuminating the surface of a strip-like material to be measured, a two-dimensional camera for imaging a rod-like light source image formed on the surface of a material to be inspected, and a computing device for obtaining the shape of the material to be measured from the position of the rod-like light source image are provided, the rod-like light source and the two-dimensional camera are located at positions facing each other on the both sides of the material to be measured, and a main projection line to the straight horizontal surface of the material to be measured connecting the center of the rod-like light source to the two-dimensional camera is inclined with respect to a straight line extending in the width direction of the material to be measured.

SUMMARY OF THE INVENTION

In JP-2002-221410-A described above, since the rod-like light source is used to obtain linear reflected light, it is necessary to use a rod-like light source having a higher illuminance degree than that of surrounding illumination or to darken the surrounding illumination. In addition, it is conceivable to dispose the rod-like light source close to the metal strip.
However, there is a problem that it is not desirable in terms of cost to prepare a rod-like light source as consumables having especially a high illuminance degree.
In addition, there is also a problem that it is not appropriate in working environments to darken the surrounding illumination.
Further, there is a problem that it is not desirable to dispose the rod-like light source close to the metal strip because it affects the space for maintenance of a rolling line.
The present invention has been made in view of the problems as described above, and provides an inappropriate quality judgment apparatus and an inappropriate quality judgment method capable of easily judging an inappropriate quality of the strip surface shape of a metal strip without using a special light source such as a rod-like light source.
The present invention includes a plurality of means for solving the above-described problems, and provides, as an example, an inappropriate quality judgment apparatus that judges an inappropriate quality of a strip shape of a metal strip rolled by a rolling mill. The apparatus includes: a roll whose rotary shaft is extended and installed in a width direction of the metal strip and that lifts the metal strip upward; a camera that captures an image including a lifted area of the metal strip lifted upward by the roll; and an image processing section that judges an inappropriate quality of a strip surface shape of the metal strip on the basis of the image imaged by the camera.
According to the present invention, it is possible to easily judge an inappropriate quality of the strip surface shape of a metal strip without using a special light source such as a rod-like light source. Problems, configurations, and effects other than those described above will become apparent from the description of the following embodiments.

BRIEF DESCRIPTION OF THE DRAWINGS

FIG. 1 is a schematic diagram for showing configurations of an inappropriate quality judgment apparatus of a first embodiment of the present invention and rolling equipment including the same;
FIG. 2 is a diagram for showing an example of a state in which an image acquired in the inappropriate quality judgment apparatus of the first embodiment is analyzed, and shows a case in which the surface of a rolled steel strip is flat;
FIG. 3 is a diagram for showing another example of a state in which an image acquired in the inappropriate quality judgment apparatus of the first embodiment is analyzed, and shows a case in which an inappropriate quality is confirmed in the strip shape of the surface of the rolled steel strip;
FIG. 4 is a graph in which, as a result of further processing data analyzed in the inappropriate quality judgment apparatus of the first embodiment, the boundary line of a reflecting light area that can be confirmed on the surface of the rolled steel strip is converted into two-dimensional coordinates;

FIG. 5 is a schematic diagram for showing configurations of a shape meter shown in a second embodiment of the present invention, an inappropriate quality judgment apparatus, and rolling equipment including the same; and

FIG. 6 is a diagram for showing an example of a configuration of the shape meter in a rolling mill of the second embodiment.

DESCRIPTION OF THE PREFERRED EMBODIMENTS

First Embodiment

Hereinafter, embodiments of an inappropriate quality judgment apparatus and an inappropriate quality judgment method of the present invention will be described using the drawings. It should be noted that the same or corresponding constitutional elements are denoted by the same or similar reference numerals in the drawings used in the specification, and the repetitive description of these constitutional elements is omitted in some cases.

First Embodiment

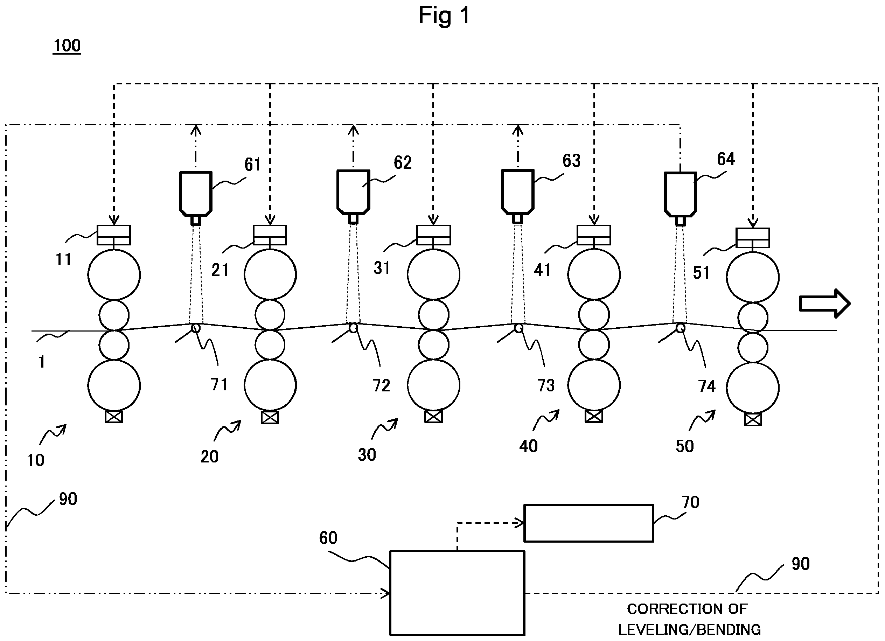

A first embodiment of an inappropriate quality judgment apparatus and an inappropriate quality judgment method of the present invention will be described using to FIG. 1 to FIG. 4.

First, the entire configuration of rolling equipment including the inappropriate quality judgment apparatus will be described using FIG. 1. FIG. 1 is a schematic diagram for showing configurations of the inappropriate quality judgment apparatus of the first embodiment and the rolling equipment including the same.

In FIG. 1, rolling equipment 100 for rolling a rolled steel strip 1 includes an F1 stand 10, an F2 stand 20, an F3 stand 30, an F4 stand 40, an F5 stand 50, cameras 61, 62, 63, and 64, loopers 71, 72, 73, and 74 for tension control, a controller 60 (image processing section), a display device 70, and the like.

Among those, the cameras 61, 62, 63, and 64, the loopers 71, 72, 73, and 74 for tension control, the controller 60 (the image processing section and a display signal section), and the display device 70 configure the inappropriate quality judgment apparatus of the present invention.

It should be noted that the rolling equipment 100 is not limited to the form in which five rolling stands as shown in FIG. 1 are provided, and the number thereof may be at least two or more.

Each of the F1 stand 10, the F2 stand 20, the F3 stand 30, the F4 stand 40, and the F5 stand 50 includes an upper work roll and a lower work roll, and an upper backup roll and a lower backup roll that are brought into contact with the upper work roll and the lower work roll, respectively, to support. The F1 stand 10, the F2 stand 20, the F3 stand 30, the F4 stand 40, and the F5 stand 50 include reduction cylinders 11, 21, 31, 41, and 51, respectively, provided on the upper parts of the upper backup rolls. It should be noted that each stand can be a 6 high rolling mill in which an intermediate roll is further provided each between work roll and backup roll.

The looper 71 is a roll for tension control. This roll is installed in such a manner that the rotary shaft thereof extends in the width direction of the rolled steel strip 1, and is provided between the F1 stand 10 and the F2 stand 20 as a roll for lifting the rolled steel strip 1 upward in the vertical direction. It should be noted that the roll for lifting upward in the present invention means a roll supported by a mechanism in which an upward controlled force acts. As a mechanism for lifting the roll upward, there is a mechanism for biasing the roll upward using a spring or the like, or a mechanism for lifting the roll using a hydraulic cylinder, motor driving, or the like.

The camera 61 is provided at a position for capturing an image including a lifted area of the rolled steel strip 1 lifted upward by the looper 71. Data of the image imaged by the camera 61 and including the lifted area of the rolled steel strip 1 lifted upward by the looper 71 is transmitted to the controller 60 via a communication line 90.

As similar to the above, the looper 72 for tension control is provided between the F2 stand 20 and the F3 stand 30, the looper 73 for tension control is provided between the F3 stand 30 and the F4 stand 40, and the looper 74 for tension control is provided between the F4 stand 40 and the F5 stand 50.

In addition, the camera 62 is provided at a position for capturing an image including a lifted area of the rolled steel strip 1 lifted upward in the vertical direction by the looper 72, the camera 63 is provided at a position for capturing an image including a lifted area of the rolled steel strip 1 lifted upward by the looper 73, and the camera 64 is provided at a position for capturing an image including a lifted area of the rolled steel strip 1 lifted upward by the looper 74. The data of the images imaged by the cameras 62, 63, and 64 is transmitted to the controller 60 via the communication line 90.

These loopers 71, 72, 73, and 74 execute a step of lifting the rolled steel strip 1 upward by the rolls whose rotary shafts are extended and installed in the width direction of the rolled steel strip 1.

In addition, these cameras 61, 62, 63, and 64 execute an imaging step of capturing the image including the lifted area of the rolled steel strip 1 lifted upward by the roll.

It should be noted that a light for illuminating the lifted capturing areas, which are mainly imaged by the cameras 61, 62, 63, and 64, of the rolled steel strip 1 lifted upward by the rolls may be a general light appropriately installed on the ceiling or the like of a rolling plant where the rolling equipment 100 is installed, and a dedicated light may be provided although special new lighting equipment is not required in the present invention.

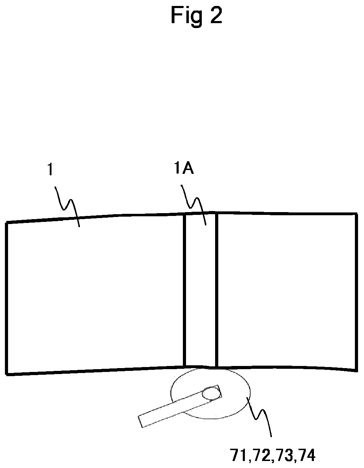

The controller 60 is an apparatus for controlling the operation of each device in the rolling equipment 100. In the embodiment, the controller 60 particularly judges an inappropriate quality of the strip surface shape of the rolled steel strip 1 on the basis of the images imaged by the cameras 61, 62, 63, and 64, and executes various control in accordance with the occurrence state of the inappropriate quality of strip shape. The details thereof will be described later using FIG. 2 to FIG. 4.

The controller 60 executes an image processing step of judging an inappropriate quality of the strip surface shape of the rolled steel strip 1 on the basis of the images imaged in the imaging step.

The display device 70 is display equipment such as a display or acoustic equipment such as an alarm. Since the display device 70 is a device for informing, for example, an operator of occurrence of the inappropriate quality of strip shape and the handling work when the controller 60 judges as an inappropriate quality of strip shape, a display is used as such a display device 70 in many cases.

Here, the above-described controller 60 includes the display signal section, and the display signal section transmits a signal relating to contents to be displayed on the display device 70 to the display device 70. The display signal section of the controller 60 and the above-described display device 70 execute a display step.

During the operation, the operator confirms the presence or absence of an inappropriate quality of strip shape by visually checking a display screen of the display device 70, each stand itself, and between the stands. For example, in a case where the display device 70 displays the type of inappropriate quality of strip shape such as center buckle and operations to be performed such as increase bending, decrease bending, WS leveling, DS leveling, and deceleration/acceleration of the roll speed, the operator can restore the state of the inappropriate quality of strip shape to an excellent state by manually performing the operations in accordance with the indications.

It should be noted that the present invention is not limited to the mode of informing the operator of an inappropriate quality of the strip shape, but may be a mode in which an operation for correcting the inappropriate quality of strip shape is automatically performed with displaying, or a mode in which an operation for correcting the inappropriate quality of strip shape is automatically performed without displaying.

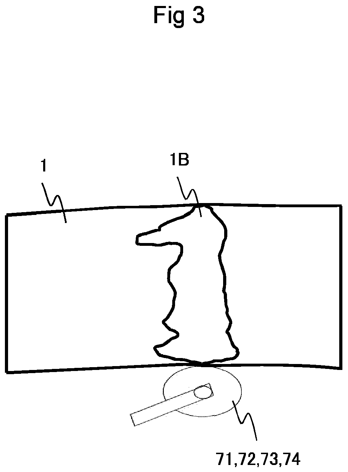

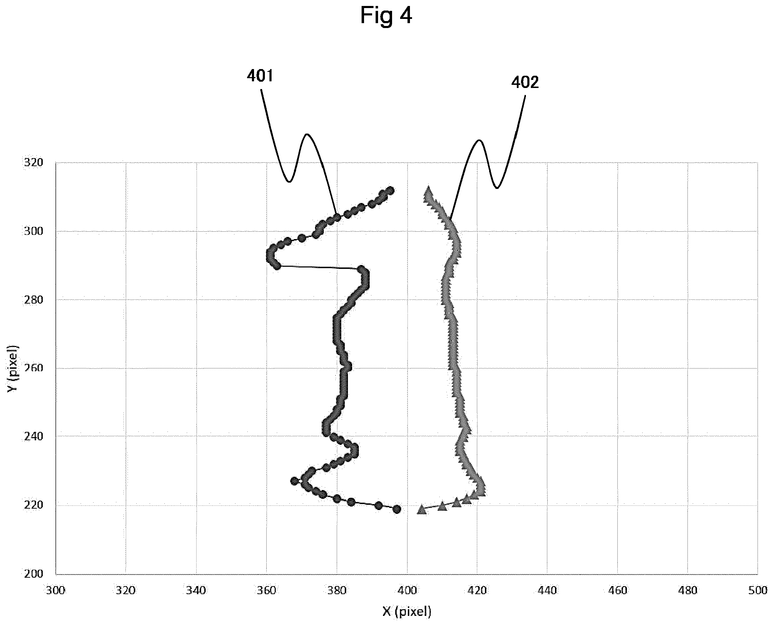

Next, concrete examples of the inappropriate quality judgment apparatus and the inappropriate quality judgment method for judging an inappropriate quality of the strip shape of the rolled steel strip 1 to be rolled in the present invention will be described below using FIG. 2 to FIG. 4. FIG. 2 and FIG. 3 show examples of a state in which the boundary of a reflecting light area reflected on the surface of the rolled steel strip 1 is analyzed from the acquired image, and FIG. 4 is a diagram for showing a result obtained in such a manner that the analyzed boundary position data of the reflecting light area is further processed and converted into two-dimensional coordinates.

During the rolling operation of the rolled steel strip 1, the cameras 61, 62, 63, and 64 continuously image the areas of the rolled steel strip 1 lifted upward by the loopers 71, 72, 73, and 74, for example, 30 frame per second (30 fps), and take the images into the controller 60. It should be noted that the areas are imaged in a moving image format, and the images can be appropriately taken into the controller 60 as still images.

The lifted area of the rolled steel strip 1 lifted upward by the loopers 71, 72, 73, and 74 is reflected on the imaged image as shown in, for example, FIG. 2, and includes a reflecting light area 1A having an approximately rectangular shape. In addition, the image reflecting the lifted area of the rolled steel strip 1 lifted upward by the loopers 71, 72, 73, and 74 includes a reflecting light area 1B having an inappropriate quality shape as shown in FIG. 3.

Here, the reflecting light area 1A is an area in which reflection light brighter than that of other parts is obtained in a range in which the rolled steel strip 1 is reflected, and a part lifted by the loopers 71, 72, 73, and 74 mainly appears. Camera lenses are directed and the cameras 61, 62, 63, and 64 are installed so as to include the reflecting light area 1A in the captured image.

For each still image of FIG. 2, FIG. 3, and the like, an area where the luminance of the upper surface of the rolled steel strip 1 is higher than a certain threshold is found by the following procedure.

First, an X coordinate and a Y coordinate are defined for each still image of FIG. 2, FIG. 3, and the like. For example, the rolling direction of the rolled steel strip 1 is defined as an X coordinate, and the strip width direction of the rolled steel strip 1 perpendicular to the rolling direction is defined as a Y coordinate. Here, it is assumed that the unit of the X coordinate and the Y coordinate is "pixel" each of which is one point of light configuring the still image.

Thereafter, the Y coordinate is fixed to a specific value, for example, Y = 0.

Then, the X coordinate (pixel) when Y = 0 is scanned from left to right, the X coordinate is changed pixel by pixel between X = 0 and X = 10000 (pixels from the left end to the right end of the image in which the rolled steel strip 1 is captured), and it is judged whether or not the luminance at the position exceeds a threshold. For example, if a case where the luminance exceeds the threshold is "bright" and a case where the luminance does not exceed the threshold is "dark", it is judged as "dark → dark → dark → dark" → "bright → bright → bright → bright → bright → bright → bright" → "dark → dark → dark → dark." Here, the boundary line of the reflecting light area exists where the luminance changes such as "dark" → "bright" and "bright" → "dark." It should be noted that since the actual number of pixels is extremely large, the number is reduced and simplified for the sake of explanation.

Next, the pixel of the Y coordinate is incremented by one to be Y = 1, and the X coordinate is scanned from left to right as similar to the above. For example, it is judged as "dark → dark → dark" → "bright → bright → bright → bright → bright → bright → bright" → "dark → dark → dark → dark → dark." When comparing Y = 0 with Y = 1, the initial continuous number of "dark" is decreased from four to three, the continuous number of "bright" is the same as seven, and the subsequent continuous number of "dark" is increased from four to five. Thus, this means that the boundary of the reflecting light area is entirely shifted to the left. It should be noted that the number of pixels is made smaller than the actual number and is simplified for the sake of explanation.

The work of scanning the X coordinate from left to right by sequentially changing the Y coordinate is repeated in the strip width direction of the rolled steel strip 1. When the work is completed in all the areas in the strip width direction, the boundary line judged as the reflecting light area exceeding the luminance of the threshold set on the upper-stream side (the left side of the reflecting light area) and the down-stream side (the right side of the reflecting light area) can be obtained, and the values of the pixel coordinates of the boundaries of the reflecting light area 1A in FIG. 2 and the reflecting light area 1B in FIG. 3 can be obtained in the acquired image.

FIG. 4 is a two-dimensional coordinate graph in units of pixels including the boundary of the reflecting light area 1B based on the captured image of FIG. 3 at a certain timing, and the coordinates of the boundary line between "bright" and "dark" are graphed in units of pixels. The boundaries of the reflecting light area located in the lifted area of the rolled steel strip 1 lifted upward by the loopers 71, 72, 73, and 74 are recognized as an upper-stream side boundary line 401 and a down-stream side boundary line 402.

It is assumed that the coordinates (x, y) of a point Left (i) configuring the upper-stream side boundary line 401 are (xLi, yLi), and the coordinates of a point Right (i) configuring the down-stream side boundary line 402 are (xRi, yRi). In addition, the Y coordinate direction matches the strip width direction.

Points at prejudged intervals in the strip width direction range from Y = 1 to Y = N, and are made to match the units of pixels in this case. The number of points configuring the upper-stream side boundary line 401 and the down-stream side boundary line 402 is N (i = 1 to N). "N" (i = 1 to N) has the same meaning in other descriptions of Equation (3) and the like to be described later.

In this case, since the Y coordinate is fixed when the points configuring the upper-stream side boundary line 401 and the down-stream side boundary line 402 are scanned, the number of points configuring the upper-stream side boundary line 401 on the left side and the number of points configuring the down-stream side boundary line 402 on the right side are the same, which is N.

The coordinate xLi (X coordinate of the boundary line on the left side) of the upper-stream side boundary line 401 can be represented as the following equation (1).

[Equation 1]

$$xLi = f(yLi) \quad (i = 1 \sim N) \quad \cdots \quad (1)$$

In addition, the coordinate xRi (X coordinate of the boundary line on the right side) of the down-stream side boundary line 402 can be represented as the following equation (2).

[Equation 2]

$$xRi = g(yRi) \quad (i = 1 \sim N) \quad \cdots \quad (2)$$

Thereafter, the controller 60 judges as an inappropriate quality of strip shape in a case where the position indicating the actual boundary in the image is different from the position of a prejudged boundary. For example, as will be described below, when it is judged that there are two or more separated areas where the luminance on the surface of the rolled steel strip 1 is equal to or brighter than a luminance threshold, it is judged that inappropriate quality inappropriate quality of strip shape has occurred.

For example, if the strip shape of the rolled steel strip 1 is excellent, one approximately straight line of the upper-stream side boundary line 401 on the left side and one approximately straight line of the down-stream side boundary line 402 on the right side as the boundary lines of the reflecting light areas 1A and 1B, namely, two approximately straight lines in total are approximately parallel to each other in the image as shown in, for example, FIG. 2. The reflecting light area is one place surrounded by the two approximately straight lines.

On the other hand, the case where there are two areas where the luminance is equal to or larger than a constant value in the image is a state where it can be judged as, for example, "dark → ⋯ → dark" → "bright → ⋯ → bright" → "dark → ⋯ → dark" → "bright → ⋯ → bright" → "dark → ⋯ → dark" when the X coordinate is scanned pixel by pixel from left to right, there are other reflecting light areas in addition to the reflecting light area 1A shown in FIG. 2 and the reflecting light area 1B shown in FIG. 3, and there are two pairs of the upper-stream side boundary line 401 and the down-stream side boundary line 402. Here, "⋯" is a simplified expression meaning that there are a number of pixels having the same luminance as the left pixel position in the magnitude relation with respect to the threshold of the luminance.

Such reflecting light areas observed in two or more places do not occur in a normal rolling state, and mean a state where a rolled inappropriate quality of strip shape in which the strip shape of the rolled steel strip 1 is wavy occurs. There is a possibility of occurrence of narrowing down (rolling inappropriate quality) in the rolled steel strip 1 discharged from the rolling mill on the rear stage side between the stands where the image is imaged.

Therefore, when there are two or more reflecting light areas, it is desirable that the controller 60 judges as an inappropriate quality of strip shape at that time and executes various measures such as notifying the operator of the occurrence of the inappropriate quality of strip shape via the display device 70, urging the operator to change the rolling conditions such as correction of the leveling / bending by the reduction cylinder 11, 21, 31, 41, 51, or the like so as to suppress the narrowing down via the display device 70, automatically changing the rolling conditions, or stopping the rolling.

It should be noted that the reflected light along the strip width direction may exist in a plurality of areas, or the reflected light along the rolling direction of the strip may exist in a plurality of areas, but it is judged as inappropriate quality inappropriate quality of strip shape in any case.

In addition, it is desirable that the controller 60 acquires, as two-dimensional coordinate data in the image, the position of the boundary of the area that is judged as the reflecting light area reflected on the surface of the rolled steel strip 1 and where the luminance is equal to or larger than a constant value in the acquired image, calculates an evaluation value for the coordinate data by pre-considered mathematical processing ways, and compares the evaluation value with a prejudged threshold of the evaluation value to judge as an inappropriate quality of strip shape.

When the threshold of the evaluation value is increased, a high degree of the inappropriate quality of strip shape can be judged, and when the threshold of the evaluation value is decreased, a low degree of the inappropriate quality of strip shape can be judged. Thus, the degree of the inappropriate quality may be shown on the basis of the evaluation value, or thresholds can be provided stepwise to show the degrees of the inappropriate quality stepwise.

For example, the controller 60 can judge as an inappropriate quality of strip shape in a case where the numerical value of the difference between the interval length between the upper-stream side boundary line 401 and the down-stream side boundary line 402 at the strip end (for example, Y = 1) on one side in the strip width direction of the rolled steel strip 1 and the interval length between the upper-stream side boundary line 401 and the down-stream side boundary line 402 at the strip end (for example, Y = N) on the other side is larger than a prejudged threshold.

This is because in a case where the length of the reflecting light area in the rolling longitudinal direction on one of the work side and the drive side changes, it is judged that edge wave is generated on one of the work side and the drive side of the rolled steel strip 1 and the strip surface shape of the rolled steel strip 1 is wavy. Thus, the presence or absence of the inappropriate quality of strip shape can be easily judged. It should be noted that the magnitude of the inappropriate quality of strip shape level is judged by comparing with the threshold of the evaluation value.

In addition, the controller 60 can judge as an inappropriate quality of strip shape in a case where a dispersion value $\sigma^2$ and a standard deviation $\sigma$ obtained for each strip width direction and obtained from the difference between a value indicating the actual position of the upper-stream side boundary line 401 or the down-stream side boundary line 402 and a value obtained from an approximate linear formula indicating the position of the upper-stream side boundary line 401 or the down-stream side boundary line 402 is larger than a prejudged threshold.

If the strip surface shape of the rolled steel strip 1 is flat without waving or the like, an image of the reflecting light area close to a rectangle along the loopers 71, 72, 73, and 74 can be obtained. Thus, the actual upper-stream side boundary line 401 and down-stream side boundary line 402 on the image tend to approximately match the approximate straight line, and the dispersion value becomes small.

On the other hand, in a case where the strip surface shape of the rolled steel strip 1 is wavy or the like, the contour of the reflecting light area of the rolled steel strip 1 reaching the loopers 71, 72, 73, and 74 varies to widen or narrow the interval of the reflecting light areas in the rolling direction. Thus, the distribution of the length between the upper-stream side boundary line 401 and the down-stream side boundary line 402 becomes different from that in a case where the surface shape is flat.

Therefore, since the actual upper-stream side boundary line 401 and down-stream side boundary line 402 on the image tend to deviate from the approximate straight line, the dispersion value becomes large. The dispersion value can be obtained from each of the upper-stream side boundary line 401 and the down-stream side boundary line 402. A threshold is provided to the dispersion value, and the magnitude of the level of the rolled inappropriate quality of strip shape can be judged by whether or not the threshold is exceeded. In addition, the judgment may be made on the basis of either one dispersion value or both dispersion values. In addition, the dispersion value may be converted into a standard deviation for judgment.

Even in a normal case, since the reflecting light area of the image is not necessarily rectangular but close to a trapezoid due to the positional relation between the cameras 61, 62, 63, and 64 and the loopers 71, 72, 73, and 74, the approximate straight lines on the upper-stream side and the down-stream side are not always parallel to each other in some cases.

In order to improve the accuracy of detection of the inappropriate quality of strip shape inappropriate quality, it is desirable to use an approximate linear formula prepared in advance on the basis of the past data of when strip shape of the rolled steel strip 1 had appropriate quality at the time of rolling. The present invention is not limited to this, and it is possible to detect whether or not an inappropriate quality of strip shape has occurred with accuracy capable of judging the inappropriate quality of strip shape even by an approximate linear formula prepared on the basis of data being detected at present.

In addition, since the coordinates of one of the boundary lines on the upstream side and the downstream side may indicate a change with high sensitivity against a change in the strip shape depending on the positional relation between the light and the cameras 61, 62, 63, and 64, it is preferable to use only the coordinates of the boundary line on the side where an inappropriate quality of strip shape can be easily detected.

As concrete processing, when the average value of the X coordinates of the upper-stream side boundary line 401 is represented by the following equation (3),

[Equation 3]

$$xLave = \frac{1}{N} \sum_{i=1}^{N} xLi \qquad \cdots \quad (3)$$

when the dispersion of the difference between the upper-stream side boundary line 401 and the average value of the X coordinates of the upper-stream side boundary line 401 is represented by the following equation (4),

[Equation 4]

$$\sigma^2 = \frac{1}{N} \sum_{i=1}^{N} (xLi - xLave)^2 \qquad \cdots \quad (4)$$

when the standard deviation of the difference between the upper-stream side boundary line 401 and the average value of the X coordinates of the upper-stream side boundary line 401 is represented by the following equation (5),

[Equation 5]

$$\sigma = \sqrt{\frac{1}{N} \sum_{i=1}^{N} (xLi - xLave)^2} \qquad \cdots \quad (5)$$

when the average value of the X coordinates of the down-stream side boundary line 402 is represented by the following equation (6),

[Equation 6]

$$xRave = \frac{1}{N}\sum_{i=1}^{N} xRi \quad \cdots \quad (6)$$

when the dispersion of the difference between the down-stream side boundary line 402 and the average value of the X coordinates of the down-stream side boundary line 402 is represented by the following equation (7), and

[Equation 7]

$$\sigma^2 = \frac{1}{N}\sum_{i=1}^{N} (xRi - xRave)^2 \quad \cdots \quad (7)$$

when the standard deviation of the difference between the down-stream side boundary line 402 and the average value of the X coordinates of the down-stream side boundary line 402 is represented by the following equation (8),

[Equation 8]

$$\sigma = \sqrt{\frac{1}{N}\sum_{i=1}^{N} (xRi - xRave)^2} \quad \cdots \quad (8)$$

in a case where the value of the standard deviation shown in Equation (5) or Equation (8) exceeds a certain threshold, it is judged that there is a possibility of unstable rolling in which an inappropriate quality of strip shape has occurred, and a warning or the like is issued via the display device 70.

It should be noted that in Equation (3) and Equation (6), the X coordinate becomes a constant value and the line becomes a straight line parallel to the Y axis.

In addition to the above, the controller 60 can judge that an inappropriate quality of strip shape has occurred in a case where the interval lengths between the upper-stream side boundary line 401 and the down-stream side boundary line 402 are obtained for all the places (Y = 1 to N) in the strip width direction, and the dispersion or standard deviation obtained from the deviation between the average value of all the interval lengths and an interval length at any place (Y = i) in the strip width direction is larger than a prejudged threshold.

Specifically, when an interval Di between the upper-stream side boundary line 401 and the down-stream side boundary line 402 is represented by the following equation (9),

[Equation 9]

$$Di = |xRi - xLi| \quad (i = 1 \sim N) \quad \cdots \quad (9)$$

when the average of the intervals between the upper-stream side boundary line 401 and the down-stream side boundary line 402 is represented by the following equation (10),

[Equation 10]

$$Dave = \frac{1}{N}\sum_{i=1}^{N} Di \quad \cdots \quad (10)$$

when the dispersion of the interval between the upper-stream side boundary line 401 and the down-stream side boundary line 402 is represented by the following equation (11), and
[Equation 11]

$$\sigma^2 = \frac{1}{N}\sum_{i=1}^{N}(Di - Dave)^2 \qquad \cdots \quad (11)$$

when the standard deviation of the interval between the upper-stream side boundary line 401 and the down-stream side boundary line 402 is represented by the following equation (12),
[Equation 12]

$$\sigma = \sqrt{\frac{1}{N}\sum_{i=1}^{N}(Di - Dave)^2} \qquad \cdots \quad (12)$$

in a case where the dispersion represented by Equation (11) or the value of the standard deviation represented by Equation (12) exceeds a certain threshold, it is judged as unstable rolling in which an inappropriate quality of strip shape has occurred, and a warning or the like is issued via the display device 70.

In addition, the controller 60 evaluates the value of Di in Equation (9), and judges as center buckle if Di at the center of the strip width is larger than other values, judges as both side edge wave if Di at both edges of the strip width is larger than that at the center of the strip width, judges as work side edge wave (hereinafter, work side is also referred to as "WS") if the value of Di on the WS of the strip width is larger than other values, judges as drive side edge wave (hereinafter, drive side is also referred to as "DS") if the value of Di on the DS of the strip width is larger than other values, judges as quarter buckle if the value of Di at intermediate position between WS and the center of the strip width and at intermediate position between DS and the center of the strip width is larger than other values, judges as WS quarter buckle if the value of Di at a position between WS and the center of the strip width is larger than other values, and judges as DS quarter buckle if the value of Di at a position between DS and the center of the strip width is larger than other values.

The display signal section of the controller 60 transmits a signal indicating the result of the judgment by the controller 60 to the display device 70. Accordingly, the operator can easily grasp the state of the strip from the display device 70 during the operation.

In the case of the description of mathematical processing, when the center length of the center of the strip in the strip width direction is ML, the length of the strip end on the work side in the strip width direction is WSL, and the length of the strip end on the drive side in the strip width direction is DSL in the length from the boundary on one end side of an area where the luminance is equal to or larger than a constant value in the strip longitudinal direction (rolling direction) to the boundary on the other end side, the controller 60 can judge as center buckle in the case of (1) ML > WSL and ML > DSL in the relation among ML, WSL, and DSL, judge as wavy edges in the case of (2) ML < WSL and ML < DSL, judge as drive side edge wave in the case of (3) ML ≥ WSL and ML < DSL, and judge as work side edge wave in the case of (4) ML < WSL and ML ≥ DSL. It is desirable to judge all of them, but only one of them may be judged.

The display signal section of the controller 60, in a case where the content to be transmitted to the display device 70 is judged as, for example, center buckle in the controller 60, displays an indication for changing the bending to the negative side, that is, one or both of an indication for weakening the increase bending and an indication for enhancing the decrease bending.

In addition, in a case where the controller 60 judges as wavy edges, an indication for changing the bending to the positive side, that is, one or both of an indication for enhancing the increase bending and an indication for weakening the decrease bending are displayed.

Then, in a case where the controller 60 judges as WS edge wave, one or both of an indication for widening the work roll gap (interval between the work rolls) on the WS of leveling and an indication for narrowing the work roll gap on the DS are displayed.

Further, in a case where the controller 60 judges as edge wave of DS, one or both of an indication for widening the work roll gap on the DS of leveling and an indication for narrowing the work roll gap on the WS are displayed.

The controller 60 of the embodiment causes the operator to pay attention by executing the display according to the above-described judgment. It is desirable to display all of them, but only one, two, or three of them can be displayed.

Furthermore, the controller 60 can judge that an inappropriate quality of strip shape has occurred in a case where the dispersion or standard deviation obtained from the deviation between the average position of the boundary lines within a specific previous time from a moment and the position of the boundary line at that moment is larger than a prejudged threshold.

For example, the number of pieces of still image data to be evaluated for 0.5 seconds is 15 if 30 pieces of still image data are evaluated for one second. That is, the number Q of pieces of still image data during t seconds is $Q = \alpha \cdot t$. Here, $\alpha$ is the number of pieces of still image data for one second.

The X coordinates xLi m and xRi m of the left side and the right side (the upper-stream side boundary line 401 and the down-stream side boundary line 402) of the boundary line of the still image data changing for t seconds have a relation represented by the following equation (13) and equation (14).

When the X coordinate of the upper-stream side boundary line 401 at a moment during t seconds is defined by the following equation (13), and
[Equation 13]

$$xLi\_m \qquad (m = 1 \sim Q) \qquad \cdots \quad (13)$$

when the X coordinate of the down-stream side boundary line 402 at a moment during t seconds is defined by the following equation (14),
[Equation 14]

$$xRi\_m \qquad (m = 1 \sim Q) \qquad \cdots \quad (14)$$

the average of the coordinates of the upper-stream side boundary line 401 for t seconds can be represented by the following equation (15), and the average of the coordinates of the down-stream side boundary line 402 for t seconds can be represented by the following equation (16). However, it is assumed that the relation $Q = \alpha \cdot t$ is satisfied.
[Equation 15]

$$xLi\_tave = \frac{1}{Q} \sum_{m=1}^{Q} xLi\_m \qquad \cdots \quad (15)$$

[Equation 16]

$$xRi\_tave = \frac{1}{Q} \sum_{m=1}^{Q} xRi\_m \qquad \cdots \quad (16)$$

The image data with which the evaluation starts in this case is image data after t seconds.

Therefore, the dispersion or standard deviation obtained from the deviation of the position of the boundary line is obtained as follows. However, "xLi_tave" is an average value for t seconds immediately before the target "xLi." Therefore, the "xLi_tave" sequentially changes. The dispersion of the X coordinate of the upper-stream side boundary line 401 from the average for t seconds is represented by the equation (17).
[Equation 17]

$$\sigma^2 = \frac{1}{N}\sum_{i=1}^{N}(xLi - xLi\_tave)^2 \qquad \cdots \ (17)$$

As similar to the upper-stream side boundary line 401, the dispersion of the X coordinate of the down-stream side boundary line 402 from the average for t seconds is represented by the equation (18).
[Equation 18]

$$\sigma^2 = \frac{1}{N}\sum_{i=1}^{N}(xRi - xRi\_tave)^2 \qquad \cdots \ (18)$$

The standard deviation of the X coordinate of the upper-stream side boundary line 401 from the average for t seconds is represented by the equation (19).
[Equation 19]

$$\sigma = \sqrt{\frac{1}{N}\sum_{i=1}^{N}(xLi - xLi\_tave)^2} \qquad \cdots \ (19)$$

The standard deviation of the X coordinate of the down-stream side boundary line 402 from the average for t seconds is represented by the equation (20).
[Equation 20]

$$\sigma = \sqrt{\frac{1}{N}\sum_{i=1}^{N}(xRi - xRi\_tave)^2} \qquad \cdots \ (20)$$

However, in a case where the dispersion each represented by Equations (17) and (18) or the value of the standard deviation each represented by Equations (19) and (20) exceeds a certain threshold, it is judged as unstable rolling in which an inappropriate quality of strip shape has occurred, and a warning or the like is issued via the display device 70.

Next, the effect of the embodiment will be described.

According to the above-described first embodiment of the present invention, the inappropriate quality judgment apparatus that judges an inappropriate quality of the strip shape of the rolled steel strip 1 rolled by the F1 stand 10, the F2 stand 20, the F3 stand 30, the F4 stand 40, and the F5 stand 50 includes: the loopers 71, 72, 73, and 74 whose rotary shafts are extended and installed in the width direction of the rolled steel strip 1 to lift the rolled steel strip 1 upward; the cameras 61, 62, 63, and 64 that capture images including a lifted area of the rolled steel strip 1 lifted upward by the loopers 71, 72, 73, and 74; and the controller 60 that judges an inappropriate quality of the strip surface shape of the rolled steel strip 1 on the basis of the images imaged by the cameras 61, 62, 63, and 64.

The rolled steel strip 1 is pushed upward by the rolls during the rolling and tension is applied. However, in a case where the surface of the rolled steel strip 1 is not wavy and has a flat strip shape, that is, an excellent strip shape, the camera image of the reflecting light area of the rolled steel strip 1 passing through the rolls reflects a band-like high-luminance area adjusted along the rolls. In fact, although the band-like reflecting light area is not a perfect rectangle due to the positional relation between the cameras and the reflecting light area on the surface of the rolled steel strip 1, images showing approximately band-like reflecting light areas that are continuous in time and relatively stable at approximately the same place can be obtained.

On the other hand, in a case where the surface of the rolled steel strip 1 has a wavy strip shape such as edge wave or center buckle, the high-luminance area is deformed unlike the approximately band-like reflecting light area in the normal state, and the high-luminance reflecting light area is not stably located at a specific position and repeatedly fluctuates along with the movement of the rolled steel strip 1.

As described above, in the area lifted upward by the rolls, a remarkable difference appears in the fluctuation of the reflecting light area of the image between the case of the appropriate quality strip shape and the case of the inappropriate quality strip shape. Accordingly, by obtaining the image of the rolled steel strip 1 passing through the roll parts lifted upward, an approximately band-like reflecting light area can be obtained when the rolled strip shape is excellent without using a special light source such as a rod-like light source and a deformed reflecting light area can be obtained when the strip shape is failed, and it is possible to judge the appropriate or inappropriate quality of the strip surface shape of the rolled steel strip 1. Thus, it is possible to judge an inappropriate quality of strip shape with a simpler configuration than before.

In addition, there are many existing rolling mills including the loopers 71, 72, 73, and 74 for tension control between the F1 stand 10, the F2 stand 20, the F3 stand 30, the F4 stand 40, and the F5 stand 50, and a light is generally provided on the ceiling. If the illumination reaches the loopers 71, 72, 73, and 74 for tension control at a sufficient illuminance degree, hardware required around the rolling mill can be prepared only by disposing the cameras 61, 62, 63, and 64 in the direction of capturing an image including the upper surface of the rolled steel strip 1 which has come to the loopers 71, 72, 73, and 74. Therefore, the present invention can be more easily applied to existing equipment. It should be noted that in a case where the light does not provide a sufficient illuminance degree, the installation positions of the cameras 61, 62, 63, and 64 may be changed, the sensitivity of the cameras may be increased, or the light equipment may be changed so as to provide a sufficient illuminance degree, and there is no difficulty in applying to the existing equipment.

Further, since the controller 60 acquires, as two-dimensional coordinate data, the position of the boundary of the area where the luminance is equal to or larger than a constant value in the image and calculates an evaluation value for the two-dimensional coordinate data by prejudged mathematical processing, an inappropriate quality of strip shape can be judged on the basis of the evaluation value. Further, since the evaluation value is compared with a prejudged threshold of the evaluation value to judge an inappropriate quality of strip shape, the inappropriate quality of strip shape can be easily grasped. Further, the controller 60 obtains the luminance at prejudged intervals in the strip width direction in the image, and thus the position of the boundary between the strongly reflective area and the weakly reflective area is obtained for each strip width direction of the rolled steel strip 1. Accordingly, the degree of the difference between the positions in the strip width direction can be mathematically and simply processed to obtain an evaluation value, and the evaluation value can be compared with a prejudged evaluation value as a reference to judge an inappropriate quality of strip shape.

It should be noted that it is possible to perform mathematical processing in consideration of not only the degree of difference between the positions of the boundaries in the strip width direction at the same timing, but also the degree of difference between the positions of the boundaries in the strip width direction at different times with the passage of time.

In addition, the controller 60 compares the calculated evaluation value with the prejudged threshold to judge an inappropriate quality, thereby enabling more accurate inappropriate quality judgment.

Further, the controller 60, by obtaining the luminance at prejudged intervals in the strip width direction in the image, can reliably detect an inappropriate quality, such as center buckle or wavy edges, in various strip width directions.

In addition, the controller 60 for transmitting a signal relating to the content to be displayed on the display device 70 is further provided, and a signal for displaying a judgment is transmitted to the display device 70, so that it is possible to urge the operator to take countermeasures, and it is possible to suppress the expansion of the inappropriate quality.

Further, the controller 60 for transmitting a signal relating to the content to be displayed on the display device 70 is further provided, and a signal for displaying an operation corresponding to a judgment is transmitted to the display device 70, so that it is possible to urge the operator to accurately cope with the inappropriate quality that has occurred, and thus it is possible to more effectively suppress the expansion of the inappropriate quality.

In addition, the controller 60, when the center length of the center of the strip in the strip width direction is ML, the length of the strip end on the work side in the strip width direction is WSL, and the length of the strip end on the drive side in the strip width direction is DSL in the length from the boundary on one end side of an area where the luminance is equal to or larger than a constant value in the strip longitudinal direction to the boundary on the other end side, by performing at least any one of a judgment of center buckle in the case of ML > WSL and ML > DSL, a judgment of wavy edges in the case of ML < WSL and ML < DSL, a judgment of drive side edge wave in the case of ML ≥ WSL and ML < DSL, and a judgment of work side edge wave in the case of ML < WSL and ML ≥ DSL, it is possible to more accurately judge an inappropriate quality of the strip surface shape.

Further, the controller 60 transmits to the display device at least one of a signal allowing to display as center buckle when judged as center buckle, a signal allowing to display as wavy edges when judged as both-edge wave, a signal allowing to display as drive side edge wave when judged as drive side edge wave, and a signal allowing to display as work side edge wave when judged as work side edge wave, and transmits to the display device 70 at least one of a signal allowing to display at least one of an indication of an operation of weakening increase bending regarding a work roll bending operation and an indication of an operation of enhancing decrease bending when judged as center buckle, a signal allowing to display at least one of an indication of an operation of enhancing the increase bending regarding the work roll bending operation and an indication of an operation of weakening the decrease bending when judged as wavy edges, a signal allowing to display at least one of an indication of an operation of widening the interval between the work rolls on the drive side regarding leveling control by each rolling load mechanism installed on the both sides of the roll and an indication of an operation of narrowing the interval between the work rolls on the work side when judged as drive side edge wave, and a signal allowing to display at least one of an indication of an operation of widening the interval between the work rolls on the work side regarding the leveling control and an indication of an operation of narrowing the interval between the work rolls on the drive side when judged as work side edge wave. Accordingly, it is possible to urge the operator who monitors the operation to take accurate and quick countermeasures, and to further effectively suppress the expansion of the inappropriate quality.

In addition, the controller 60 judges as an inappropriate quality when it is judged that there are two or more separated areas where the luminance is equal to or larger than a constant value in the image. Accordingly, if the rolled steel strip 1 has a highly-accurate plane, the area of the strongly reflective light from the rolled steel strip 1 is one area. On the contrary, if the rolled steel strip 1 has large edge wave or center buckle, the strip surface becomes wavy and has large inappropriate qualities, and thus the area of the strongly reflective light appears as a plurality of areas. Accordingly, it is possible to easily judge as an inappropriate quality.

Second Embodiment

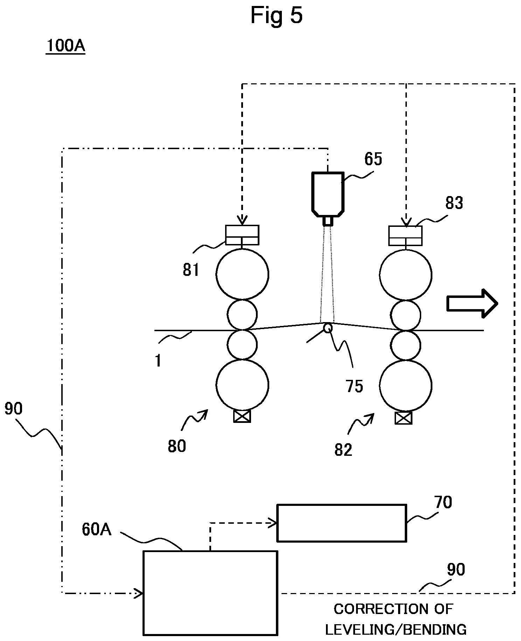

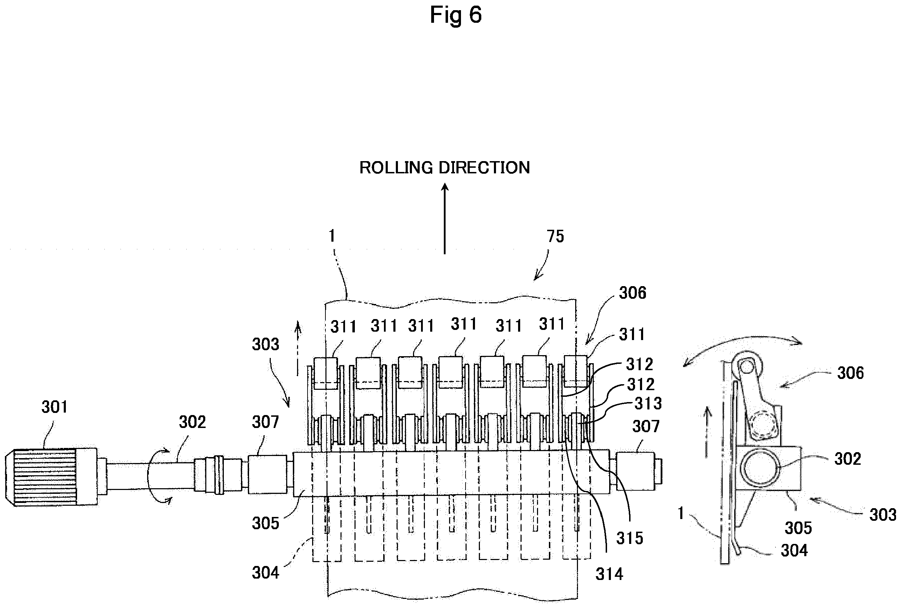

An inappropriate quality judgment apparatus and an inappropriate quality judgment method of a second embodiment of the present invention will be described using FIG. 5 and FIG. 6. FIG. 5 is a schematic diagram for showing configurations of the inappropriate quality judgment apparatus of the second embodiment and rolling equipment including the same, and FIG. 6 is a diagram for showing an example of a configuration of a shape meter.

In rolling equipment 100A shown in FIG. 5, a rolling mill 80 and a rolling mill 82 are configured as two stands, and a shape meter 75 for lifting a rolled steel strip 1 upward is provided on the outlet side of the rolling mill 80 including a reduction cylinder 81 and on the inlet side of the rolling mill 82 including a reduction cylinder 83. The shape meter 75 executes a step of lifting the rolled steel strip 1 upward.

In the shape meter 75, for example, the moment acting on the both ends of the shaft of a segment roll 311 transmits the line tension between target rolling mills to a support shaft (not shown) connected by a fixing member 313 via a support arm 312 from the strip shape of the rolled steel strip 1, the torsional strain of the support shaft is generated, and torque distribution is acquired by torque meters 314 and 315.

Specifically, as shown in FIG. 6, a support shaft 302 connected to a drive motor 301 and extending in the width direction of the rolled steel strip 1 is provided, and a table 303 is supported by the support shaft 302. The table 303 is configured using a guide member 304 for guiding the rolled steel strip 1 and a guide support member 305 for supporting the guide member 304, and seven detectors 306 are supported on the surface of the downstream side in the rolling direction of the guide support member 305. In addition, bearings 307 supported by a frame (not shown) are provided at the support shaft 302 on both sides of the table 303.

Each detector 306 includes: the segment roll 311 that is rotated when the rolled steel strip 1 is brought into contact; a pair of support arms 312 that supports the segment roll 311 between one ends; a fixing member 313 that supports the other end of the support arm 312 and is supported by the guide support member 305 of the table 303; ring-shaped torque meters 314 and 315 that support the other end of the support arm 312 and are installed between the other end of the support arm 312 and the fixing member 313; and a support shaft (not shown) that penetrates openings of the torque meters 314 and 315.

The segment roll 311 is rotatably supported between the support arms 312 via an automatic-aligning bearing (not shown) provided at one end of the support arm 312. In addition, a support shaft (not shown) penetrates the fixing member 313, and an end of the support shaft is supported by an automatic-aligning bearing (not shown) provided at the other end of the support arm 312.

The shape meter 75 drives the drive motor 301 to appropriately rotate the support shaft 302, thereby bringing the segment roll 311 into contact with the back of the rolled steel strip 1 and lifting the rolled steel strip 1. In addition, each detector 306 calculates each moment and tension distribution from the detected torque, and the shape meter 75 computes a strip shape on the basis of the tension distribution.

Referring back to FIG. 5, a camera 65 is provided to capture an image including a lifted area of the rolled steel strip 1 lifted upward by the shape meter 75. An imaging step is executed by the camera 65.

In addition, a controller 60A judges an inappropriate quality of the surface shape of the rolled steel strip 1 on the basis of the image imaged by the camera 65 in the embodiment. An image processing step is executed by the controller 60A.

The other configurations and operations are substantially the same as those of the inappropriate quality judgment apparatus and the inappropriate quality judgment method of the above-described first embodiment, and the details thereof are omitted.

As in the second embodiment of the present invention, even in the inappropriate quality judgment apparatus, as rolls configuring the present invention, and the inappropriate quality judgment method including a plurality of divided segment rolls 311, the support frame that supports the segment rolls 311 at one end and is provided with the torque meters 314 and 315 at the other end, and the shape meter 75 that calculates a strip shape on the basis of tension distribution calculated from each of the measured torque values, the substantially same effects as those of the inappropriate quality judgment apparatus and the inappropriate quality judgment method of the above-described first embodiment can be obtained.

<Others>

It should be noted that the present invention is not limited to the above-described embodiments, and includes various modified examples. The embodiments have been described in detail to easily understand the present invention, and the present invention is not necessarily limited to those including all the configurations described above.

In addition, some configurations of an embodiment can be replaced by a configuration of another embodiment. In addition, a configuration of an embodiment can be added to a configuration of another embodiment. In addition, some configurations of each embodiment can be added to, deleted from, and replaced by other configurations.

For example, although the metal strip to be rolled has been described above as the rolled steel strip 1, the material to be rolled may be a non-ferrous material such as aluminum or copper, and a strip made of a metal material that can be rolled in general can be used.

**Claims**

1. An inappropriate quality judgment apparatus that judges an inappropriate quality of a strip shape of a metal strip (1) rolled by a rolling mill (10, 20, 30, 40, 50), the apparatus comprising:

   a roll (71, 72, 73, 74, 311) whose rotary shaft is extended and installed in a width direction of the metal strip (1) and that lifts the metal strip (1) upward; **characterized by**
   a camera (61, 62, 63, 64) that captures an image including a lifted area of the metal strip (1) lifted upward by the roll (71, 72, 73, 74, 311); and
   an image processing section (60, 60A) that judges an inappropriate quality of a strip surface shape of the metal strip (1) on a basis of the image imaged by the camera (61, 62, 63, 64) .

2. The inappropriate quality judgment apparatus according to claim 1, wherein
   the roll is a looper (71, 72, 73, 74) for tension control provided between rolling mills (10, 20, 30, 40, 50).

3. The inappropriate quality judgment apparatus according to claim 1 or 2, wherein

   the roll includes a plurality of divided segment rolls (311), and
   a support frame that supports each segment roll at one end and is provided with a torque meter (314, 315) at another end is provided, and a shape meter (75) that calculates a strip shape on a basis of tension distribution calculated from each of measured torque values is provided.

4. The inappropriate quality judgment apparatus according to any of claims 1 to 3, wherein
   the image processing section (60, 60A) acquires, as two-dimensional coordinate data, a position of the boundary of an area where a luminance is equal to or larger than a certain luminance threshold in the image, and calculates an evaluation value for the two-dimensional coordinate data by pre-considered mathematical processing ways to judge an inappropriate quality.

**5.** The inappropriate quality judgment apparatus according to claim 4, wherein
the image processing section (60, 60A) compares the calculated evaluation value with a luminance threshold to judge an inappropriate quality.

**6.** The inappropriate quality judgment apparatus according to claim 4 or 5, wherein
the image processing section (60, 60A) obtains a luminance at regular interval distance in a strip width direction in the image.

**7.** The inappropriate quality judgment apparatus according to any one of claims 1 to 6, further comprising:

a display signal section (60, 60A) that transmits a signal relating to content to be displayed in a display device (70), wherein
the display signal section (60, 60A) transmits a signal allowing to display a judgment of the image processing section (60, 60A) to the display device (70).

**8.** The inappropriate quality judgment apparatus according to any one of claims 1 to 6, further comprising:

a display signal section (60, 60A) that transmits a signal relating to content to be displayed in a display device (70), wherein
the display signal section (60, 60A) transmits a signal allowing to display an operation according to a judgment of the image processing section (60, 60A) to the display device (70).

**9.** The inappropriate quality judgment apparatus according to claim 4 or any claim dependent on claim 4, wherein
the image processing section (60, 60A) performs at least any one of:

when a center length of a center of the strip in a strip width direction is ML, a length of a strip end on a work side in the strip width direction is WSL, and a length of a strip end on a drive side in the strip width direction is DSL in a length from a boundary on one end side of an area where the luminance is equal to or larger than a constant value in a strip longitudinal direction to a boundary on another end side,
a judgment of center buckle in a case of ML > WSL and ML > DSL,
a judgment of wavy edges in a case of ML < WSL and ML < DSL,
a judgment of drive side edge wave in a case of ML ≥ WSL and ML < DSL, and
a judgment of work side edge wave in a case of ML < WSL and ML ≥ DSL.

**10.** The inappropriate quality judgment apparatus according to claim 9, wherein

a display signal section (60, 60A) that transmits a signal relating to content to be displayed in a display device (70) is provided, and
the display signal section (60, 60A) transmits to the display device (70) at least any one of:

a signal allowing to display as center buckle in a case where the image processing section (60, 60A) judges as center buckle;
a signal allowing to display as wavy edges in a case where the image processing section (60, 60A) judges as both-edge wave;
a signal allowing to display as drive side edge wave in a case where the image processing section (60, 60A) judges as drive side edge wave; and
a signal allowing to display as work side edge wave in a case where the image processing section (60, 60A) judges as work side edge wave.

**11.** The inappropriate quality judgment apparatus according to claim 9 or 10, wherein

a display signal section (60, 60A) that transmits a signal relating to content to be displayed in a display device (70) is provided, and
the display signal section (60, 60A) transmits to the display device (70) at least any one of:

a signal allowing to display at least one of an indication of an operation of weakening increase bending and an indication of an operation of enhancing decrease bending regarding a work roll bending operation in a case where the image processing section (60, 60A) judges as center buckle;

a signal allowing to display at least one of an indication of an operation of enhancing the increase bending and an indication of an operation of weakening the decrease bending regarding the work roll bending operation in a case where the image processing section (60, 60A) judges as wavy edges;

a signal allowing to display at least one of an indication of an operation of widening an interval between the work rolls on the drive side and an indication of an operation of narrowing the interval between the work rolls on the work side regarding leveling control by reduction apparatuses disposed on both sides of the roll in a case where the image processing section (60, 60A) judges as drive side edge wave; and

a signal allowing to display at least one of an indication of an operation of widening the interval between the work rolls on the work side and an indication of an operation of narrowing the interval between the work rolls on the drive side regarding the leveling control in a case where the image processing section (60, 60A) judges as work side edge wave.

12. The inappropriate quality judgment apparatus according to any one of claims 1 to 11, wherein
the image processing section (60, 60A) judges as an inappropriate quality when it is judged that there are two or more separated areas where the luminance is equal to or larger than a constant value in the image.

13. An inappropriate quality judgment method that judges an inappropriate quality of a strip shape of a metal strip (1) rolled by a rolling mill (10, 20, 30, 40, 50), the method comprising:

a step of lifting the metal strip (1) upward by a roll installed in a width direction of the metal strip (1); **characterized in that**
an imaging step of capturing an image including a lifted area of the metal strip (1) lifted upward by the roll; and
an image processing step of judging an inappropriate quality of a strip surface shape of the metal strip (1) on a basis of the image obtained in the imaging step.

14. The inappropriate quality judgment method according to claim 13, further comprising:
after the image processing step, a display step of displaying a judgment result.

## Fig 1

CORRECTION OF
LEVELING/BENDING

Fig 2

1

1A

71,72,73,74

Fig 3

# Fig 4

EP 3 995 222 A1

# Fig 5

100A

65

83

81

1

75

80

82

90

70

60A

90

CORRECTION OF
LEVELING/BENDING

Fig 6

Europäisches
Patentamt

European
Patent Office

Office européen
des brevets

# EUROPEAN SEARCH REPORT

**Application Number**

EP 21 20 1537

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2004 141956 A (SUMITOMO METAL IND) 20 May 2004 (2004-05-20) | 1,2,4-14 | INV. B21B38/02 |
| Y | * paragraph [0038] * * paragraph [0059]; figure 1 * | 3 | |
| X | EP 2 998 695 A1 (NIPPON STEEL & SUMITOMO METAL CORP [JP]) 23 March 2016 (2016-03-23) | 1,2,4-14 | |
| Y | * paragraph [0018] – paragraph [0024]; figure 2C * | 3 | |
| X | JP S63 134903 A (SUMITOMO METAL IND) 7 June 1988 (1988-06-07) | 1,2,4-14 | |
| Y | * paragraph [0001]; figure 1 * | 3 | |
| Y | DE 40 31 666 A1 (MASCH & WERKZEUGBAU GMBH [DE]) 18 April 1991 (1991-04-18) * column 4, line 2 – line 15; figure 3 * | 3 | |

**TECHNICAL FIELDS SEARCHED     (IPC)**

B21B

The present search report has been drawn up for all claims

| Place of search | Date of completion of the search | Examiner |
|---|---|---|
| Munich | 18 March 2022 | Frisch, Ulrich |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

..................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 21 20 1537**

This annex lists the patent family members relating to the patent documents cited in the above-mentioned European search report.
The members are as contained in the European Patent Office EDP file on
The European Patent Office is in no way liable for these particulars which are merely given for the purpose of information.

**18-03-2022**

| Patent document cited in search report | | Publication date | Patent family member(s) | | Publication date |
|---|---|---|---|---|---|
| JP 2004141956 | A | 20-05-2004 | JP | 3885955 B2 | 28-02-2007 |
| | | | JP | 2004141956 A | 20-05-2004 |
| EP 2998695 | A1 | 23-03-2016 | BR | 112015028619 A2 | 25-07-2017 |
| | | | CN | 105229413 A | 06-01-2016 |
| | | | EP | 2998695 A1 | 23-03-2016 |
| | | | JP | 5994937 B2 | 21-09-2016 |
| | | | JP | WO2014185478 A1 | 23-02-2017 |
| | | | KR | 2016006219 A | 18-01-2016 |
| | | | US | 2016102971 A1 | 14-04-2016 |
| | | | WO | 2014185478 A1 | 20-11-2014 |
| JP S63134903 | A | 07-06-1988 | JP | H0515202 B2 | 01-03-1993 |
| | | | JP | S63134903 A | 07-06-1988 |
| DE 4031666 | A1 | 18-04-1991 | DE | 4031666 A1 | 18-04-1991 |
| | | | DE | 4042705 C2 | 15-02-2001 |

EPO FORM P0459

For more details about this annex : see Official Journal of the European Patent Office, No. 12/82

**EP 3 995 222 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002221410 A